Europäisches Patentamt

European Patent Office

Office européen des brevets

(19)

(11) Numéro de publication: **0 268 529**
**B1**

(12) **FASCICULE DE BREVET EUROPEEN**

(45) Date de publication du fascicule du brevet:
**21.03.90**

(21) Numéro de dépôt: **87402540.6**

(22) Date de dépôt: **10.11.87**

(51) Int. Cl.⁴: **E01D 19/04, F16M 7/00**

(54) **Perfectionnements aux supports oscillants pour charges lourdes.**

(30) Priorité: **14.11.86 FR 8615871**

(43) Date de publication de la demande:
**25.05.88 Bulletin 88/21**

(45) Mention de la délivrance du brevet:
**21.03.90 Bulletin 90/12**

(84) Etats contractants désignés:
**AT BE CH DE ES GB GR IT LI NL SE**

(56) Documents cités:
**EP-A- 0 095 413**
**EP-A- 0 122 873**
**EP-A- 0 166 267**
**DE-A- 3 423 122**
**US-A- 4 262 976**

(73) Titulaire: **FREYSSINET INTERNATIONAL (STUP),
52-54 rue de la Belle Feuille, F-92100 Boulogne(FR)**

(72) Inventeur: **de la Fuente, Carlos, 17 Rue du Sergent
Bobillot, F-92000 Nanterre(FR)**
Inventeur: **Bouteille, Robert, 2 Rue Alfred Stevens,
F-75009 Paris(FR)**

(74) Mandataire: **Behaghel, Pierre et al, CABINET
PLASSERAUD 84 rue d'Amsterdam, F-75009 Paris(FR)**

## Description

L'invention est relative aux dispositifs destinés à supporter des charges lourdes telles que des piles de ponts, des plate-formes maritimes ou des éléments de structures industrielles en rendant possibles de légères oscillations ou variations d'inclinaison de ces charges par rapport à la fondation porteuse. Un tel dispositif a été décrit par example dans le DE-A 3 423 122.

On connaît dans ce domaine des supports, désignés sous l'appellation "appuis en pot", comprenant un pot cylindrique inférieur qui constitue l'embase porteuse, une masse de matière plastique ou élastique logée dans ce pot, un piston servant d'appui à la charge à supporter et introduit avec un léger jeu dans le pot de façon à reposer sur la susdite masse et des moyens d'étanchéité pour éviter toute fuite de la matière constitutive de la masse entre le piston et le pot.

L'invention a pour but, surtout, de proposer des supports répondant mieux que ces appuis en pot aux différentes exigences de la pratique, notamment en ce qui concerne la stabilité, la simplicité d'emploi et le prix de revient, en particulier lorsque les charges à supporter sont très lourdes, étant par exemple supérieures à 100 tonnes et même à 1000 tonnes.

A cet effet, les supports du genre en question selon l'invention sont caractérisés en ce qu'ils comportent une embase porteuse annulaire évidée par une rigole annulaire étroite, le rapport entre le diamètre moyen de cette rigole et sa largeur radiale étant supérieur à 5 et de préférence de l'ordre de 15 à 20, un coussin en matière pâteuse incompressible mais déformable logé dans cette rigole, un anneau plongeur rigide propre à servir d'appui, directement ou non, à la charge à supporter et introduit avec un léger jeu dans la rigole de façon à reposer sur le coussin et des moyens d'étanchéité pour éviter toute fuite de la matière constitutive du coussin entre la rigole et l'anneau.

Dans des modes de réalisation préférés, on a recours en outre à l'une et/ou à l'autre des dispositions suivantes :
- le coussin est constitué en une gomme silicone,
- la demi-section axiale de l'anneau plongeur est délimitée par un trapèze isocèle dont la grande base est horizontale et se trouve en bas,
- les moyens d'étanchéité comprennent une rondelle en matière élastique renforcée par deux viroles métalliques présentant un profil en L et composées de deux tronçons annulaires raccordés entre eux, savoir un tronçon cylindrique propre à glisser verticalement le long de la rigole et un tronçon plat appliqué contre l'anneau plongeur,
- dans un support selon l'alinéa précédent, l'une au moins des faces métalliques en regard destinées à glisser l'une contre l'autre a été soumise avant montage à un traitement de phosphatation-savonnage antifriction.

L'invention comprend, mises à part ces dispositions principales, certaines autres dispositions qui s'utilisent de préférence en même temps et dont il sera plus explicitement question ci-après.

Dans ce qui suit, l'on va décrire des modes de réalisation préférés de l'invention en se référant au dessin ci-annexé d'une manière bien entendu non limitative.

La figure 1, de ce dessin, montre en coupe axiale un support oscillant de charge lourde établi selon l'invention.

La figure 2 montre une portion du même support à plus grande échelle et en demi-coupe axiale, pour une inclinaison normale de la charge supportée (axe vertical).

La figure 3 montre semblablement une partie de ladite portion en son état correspondant à une légère inclinaison de la charge supportée (axe légèrement incliné sur la verticale).

La figure 4 montre semblablement une variante de ladite partie.

La charge lourde à supporter, qui est par exemple une pile de pont, est symbolisée sur le dessin par un corps cylindrique 1 présentant une collerette intermédiaire 2.

Le support de cette charge comprend :
- une embase annulaire 3 entourant avec jeu la portion du corps 1 situé au-dessous de la collerette 2, embase évidée par une rigole annulaire étroite 4 et reposant sur un massif de fondation porteur 5,
- un coussin 6 constitué en une matière pâteuse ou plastique incompressible et déformable, logé dans la rigole 4,
- un anneau plongeur 7 introduit verticalement dans la rigole 4 avec un léger jeu, anneau propre à servir d'appui pour la collerette 2 par l'intermédiaire d'une bague 8 de répartition et de centrage,
- et des moyens d'étanchéité pour éviter toute fuite de la matière pâteuse constitutive de coussin 6 entre la rigole et l'anneau.

La rigole est étroite en ce sens que le rapport entre son diamètre moyen et sa largeur radiale est supérieur à 5 et de préférence de l'ordre de 15 à 20.

Le diamètre moyen de cette rigole est généralement compris entre 0,25 m et 1,50 m.

Sa demi-section transversale est rectangulaire et de préférence carrée ou un peu plus profonde que large.

L'épaisseur de la paroi qui la délimite est avantageusement du même ordre de grandeur que sa largeur.

La matière pâteuse constitutive du coussin 6 est par exemple une gomme de silicone.

Mais elle pourrait également être constituée par toute pâte susceptible de fluer sous charge sans réduction de volume, pâte notamment à base d'argile ou autre.

La base annulaire de l'anneau plongeur 7 est plane et délimitée intérieurement par un cercle de diamètre légèrement supérieur au diamètre intérieur de la rigole 4 et extérieurement par un cercle de diamètre légèrement inférieur au diamètre extérieur de ladite rigole.

Il présente une légère dépouille en ce sens qu'il s'amincit vers le haut, sa demi-section axiale étant délimitée par un trapèze isocèle dont la grande base est en bas : cette forme permet de réduire les jeux qui sont nécessaires pour rendre possibles les "oscillations" ou variations d'inclinaison de l'anneau plongeur par rapport à la rigole.

Les moyens d'étanchéité sont constitués par exemple par une rondelle 9 en matière plastique (telle que le polytétrafluoroéthylène, une polyamide ou du chlorure de polyvinyle) s'étendant sur toute la largeur de la rigole 4 et reposant sur le coussin 6.

Cette rondelle 9 présente avantageusement des surépaisseurs 10 de section triangulaire prolongeant vers le bas ses deux bords intérieur et extérieur.

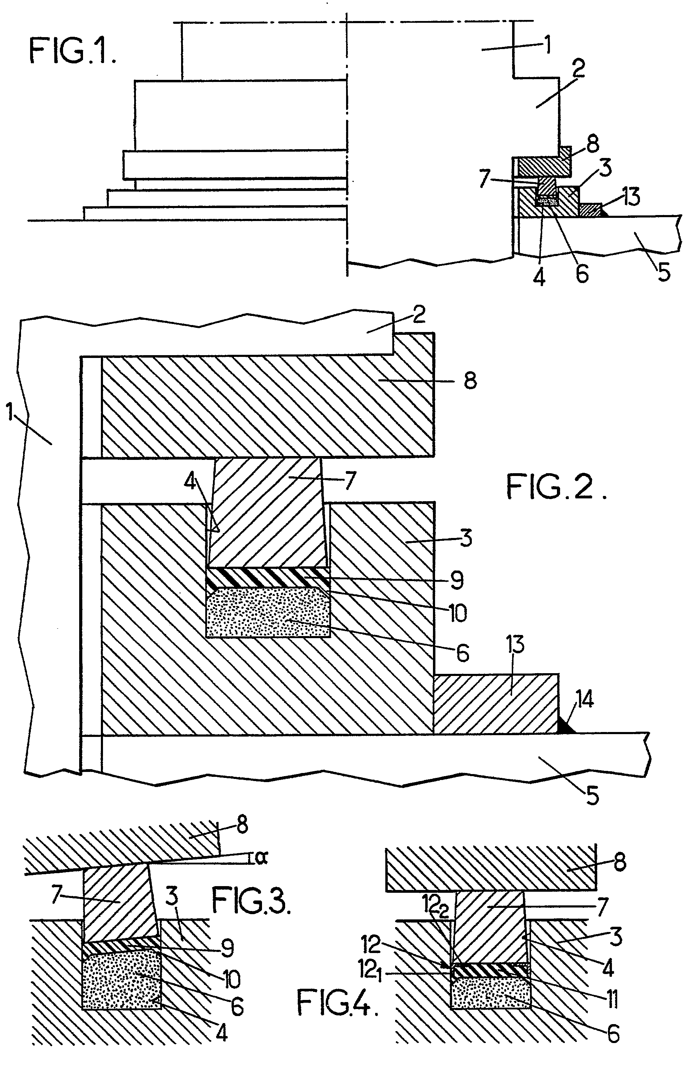

Selon une variante schématisée sur la figure 4, lesdits moyens d'étanchéité sont constitués par une rondelle 11 en matière élastomère telle qu'un caoutchouc Néoprène, rondelle renforcée sur ses deux arêtes supérieures par deux viroles métalliques 12, chaque virole comportant d'une part une bague cylindrique $12_1$ propre à glisser directement contre la rigole, mais s'étendant seulement sur une partie de la tranche de la rondelle 11, et d'autre part une rondelle plate $12_2$ prenant directement appui contre l'anneau plongeur 7.

L'expérience a montré que, d'une façon surprenante, une telle construction permettait non seulement de supporter des charges très lourdes, pouvant atteindre et même dépasser 1000 tonnes, mais également de rendre possibles les modifications d'inclinaison des charges ainsi supportées, modifications pouvant atteindre et même dépasser 5°.

Lors de ces modifications, en effet, la matière pâteuse constitutive du coussin 6 migre le long de la rigole étroite 4 comme s'il s'agissait d'un liquide, tout en déplaçant verticalement les organes d'étanchéité le long des faces verticales de la rigole.

Ces migrations et déplacements n'entraînent aucune dégradation du support et sont totalement réversibles, de sorte que l'anneau plongeur 7 peut jouer indéfiniment son rôle de "bascule" ou de "rotule" sans frottement en reposant sur le lit de support à la fois ferme et souple constitué par le coussin 6.

Pour faciliter les déplacements verticaux des organes d'étanchéité le long de la rigole 4, il peut être intéressant, dans la variante de la figure 4 faisant intervenir des viroles métalliques 12, de faire subir préalablement un traitement anti-friction à l'une au moins des deux surfaces métalliques destinées à venir en contact mutuel : on peut adopter à cet effet le procédé de phosphatation-savonnage qui a été décrit dans la demande de brevet France n° 82 08902.

Sur les figures 1 et 2, on a désigné par la référence 13 une bague de centrage qui est fixée sur le massif de fondation 5, notamment par soudage en 14, et qui est destinée à positionner avec exactitude l'embase annulaire 3 sur ce massif, embase qu'elle entoure jointivement.

Sur la figure 3, on voit la position occupée par l'anneau plongeur 7 lorsque l'axe de la charge lourde supportée --axe qui est confondu avec celui dudit anneau plongeur 7-- s'incline d'un angle α sur la verticale : cet angle α, qui est généralement inférieur à 5°, a été fortement agrandi pour la clarté du dessin et correspond à l'inclinaison sur l'horizontale du plan contenant la base de l'anneau plongeur 7.

En suite de quoi, et quel que soit le mode de réalisation adopté, on dispose finalement d'un support oscillant de charge lourde dont la constitution et le fonctionnement résultent suffisamment de ce qui précède.

Ce support présente de nombreux avantages par rapport à ceux antérieurement connus et en particulier les suivants :

- la charge supportée est répartie sur une plage annulaire étroite au lieu d'être concentrée sur une plage centrale, ce qui permet de conférer à l'ensemble une plus grande stabilité,
- vu sa forme annulaire, le support peut être traversé par une partie de la charge supportée, ce qui permet d'abaisser le centre de gravité de cette charge par rapport au support et, ici encore, d'améliorer la stabilité,
- la masse de matière pâteuse constitutive du coussin de support est réduite pour une valeur donnée de la charge supportée par rapport aux constructions connues des "appuis en pot", ce qui réduit d'autant le prix de revient.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment celles où le support comporterait plus d'un ensemble rigole-coussin pâteux-anneau plongeur du type ci-dessus décrit, deux tels ensembles étant par exemple superposés et

- soit construits dans le même sens, ce pour quoi l'anneau plongeur de l'ensemble inférieur serait solidaire de l'embase rainurée de l'ensemble supérieur,
- soit construits tête-bêche, ce pour quoi les deux rigoles se feraient face verticalement et encadreraient un anneau plongeur unique intermédiaire dont la base et le sommet seraient introduits respectivement dans ces deux rigoles.

**Revendications**

1. Support oscillant pour charge lourde (1), caractérisé en ce qu'il comporte une embase porteuse annulaire (3) évidée par une rigole annulaire étroite (4), le rapport entre le diamètre moyen de cette rigole et sa largeur radiale étant supérieur à 5 et de préférence de l'ordre de 15 à 20, un coussin (6) en matière pâteuse incompressible mais déformable logé dans cette rigole, un anneau plongeur rigide (7) propre à servir d'appui, directement ou non, à la charge à supporter (1,2) et introduit avec un léger jeu dans la rigole de façon à reposer sur le coussin, et des moyens d'étanchéité (9, 10 ; 11, 12) pour éviter toute fuite de la matière constitutive du coussin entre la rigole et l'anneau.

2. Support selon la revendication 1, caractérisé en ce que le coussin (6) est constitué en une gomme silicone.

3. Support selon l'une quelconque des précédentes revendications, caractérisé en ce que la demi-section axiale de l'anneau plongeur (7) est délimitée par un trapèze isocèle dont la grande base est horizontale et se trouve en bas.

4. Support selon l'une quelconque des précédentes revendications, caractérisé en ce que les moyens d'étanchéité comprennent une rondelle en matière élastique (11) renforcée par deux viroles métalliques (12) présentant un profil en L et composées de deux tronçons annulaires raccordés entre eux, savoir un tronçon cylindrique ($12_1$) propre à glisser verticalement le long de la rigole et un tronçon plat ($12_2$) appliqué contre l'anneau plongeur.

5. Support selon la revendication 4, caractérisé en ce que l'une au moins des faces métalliques en regard destinées à glisser l'une contre l'autre a été soumise avant montage à un traitement anti-friction, notamment de phosphatation-savonnage.

6. Support selon l'une quelconque des précédentes revendications, caractérisé en ce qu'il est associé à au moins un second ensemble rigole (4)-coussin pâteux (6)- anneau plongeur (7) du type ci-dessus, les ensembles en question étant superposés.

7. Support selon la revendication 6, comprenant deux ensembles superposés du type indiqué, caractérisé en ce que ces deux ensembles sont construits dans le même sens, ce pour quoi l'anneau plongeur (7) de l'ensemble inférieur est solidaire de l'embase (3) rainurée par une rigole annulaire (4) de l'ensemble supérieur.

8. Support selon la revendication 6, comprenant deux ensembles superposés, caractérisé en ce que ces deux ensembles sont construits tête bêche, ce pour quoi les deux rigoles (4) se font face verticalement et encadrent un annneau plongeur unique intermédiaire (7) dont la base et le sommet sont introduits respectivement dans ces deux rigoles.

## Patentansprüche

1. Oszillierendes Lager für schwere Lasten (1), gekennzeichnet durch eine ringförmige Tragbasis (3), in der eine schmale ringförmige Rinne (4) ausgenommen ist, wobei das Verhältnis zwischen dem mittleren Durchmesser dieser Rinne und ihrer radialen Breite größer als 5 ist und vorzugsweise in der Größenordnung von 15 bis 20 liegt, ein Kissen (6) aus inkompressiblem, aber verformbarem pastösen Material, welches in dieser Rinne angeordnet ist, einen starren Tauchring (7), der als direktes oder indirektes Auflager für die abzustützende Last (1, 2) dient und mit leichtem Spiel in die Rinne eingreift, so daß er auf dem Kissen ruht, und Dichtmitteln (9, 10; 11, 12) um jeden Austritt des das Kissen bildenden Materials zwischen der Rinne und dem Ring zu verhindern.

2. Lager nach Anspruch 1, dadurch gekennzeichnet, daß das Kissen (6) aus einem Silikonkautschuk besteht.

3. Lager nach einem der vorhergehenden Ansprüche, dadurch gekennzeichnet, daß der axiale Halbschnitt des Tauchringes (7) durch ein gleichschenkeliges Trapez begrenzt ist, dessen größere Basis horizontal verläuft und sich unten befindet.

4. Lager nach einem der vorhergehenden Ansprüche, dadurch gekennzeichnet, daß die Dichtungsmittel eine Scheibe aus elastischem Material (11) aufweisen, die durch zwei metallische Ringe (12) verstärkt ist, welche L-förmiges Profil haben und aus zwei aneinander anschließenden ringförmigen Abschnitten bestehen, nämlich einem zylindrischen Abschnitt ($12_1$), der in vertikaler Richtung entlang der Rinne gleiten kann, und einem ebenflächigen Abschnitt ($12_2$), der am Tauchring anliegt.

5. Lager nach Anspruch 4, dadurch gekennzeichnet, daß zumindest eine der einander gegenüberliegenden metallischen Seiten, die aufeinander gleiten, vor der Montage einer Antireibungsbehandlung unterworfen worden ist, insbesondere mit Phosphatseifebildung.

6. Lager nach einem der vorhergehenden Ansprüche, dadurch gekennzeichnet, daß ihm zumindest eine zweite Anordnung aus Rinne (4) – pastösem Kissen (6) – Tauchring (7) der vorstehend erläuterten Art zugeordnet ist, wobei die in Frage stehenden Anordnungen einander überlagern.

7. Lager nach Anspruch 6, umfassend zwei übereinanderliegende Anordnungen der erläuterten Art, dadurch gekennzeichnet, daß diese beiden Anordnungen in dem gleichen Sinn aufgebaut sind, wobei der Tauchring (7) der unteren Anordnung mit der eine Ringrinne (4) aufweisenden Basis (3) der oberen Anordnung in Verbindung steht.

8. Lager nach Anspruch 6, mit zwei übereinanderliegenden Anordnungen, dadurch gekennzeichnet, daß diese beiden Anordnungen in dem Sinn Kopfbei-Fuß ausgebildet sind, so daß die beiden Rinnen (4) einander vertikal gegenüberliegen und einen einzigen dazwischen angeordneten Tauchring (7) aufnehmen, dessen Basis und Scheitel in die beiden Rinnen eingeführt sind.

## Claims

1. Oscillating support for heavy load, characterised in that it comprises an annular bearing base (3) hollowed by an annular narrow channel (4), the ratio between the middle diameter of said channel and its radial width being higher than 5 and preferably of the order of 15 to 20, a cushion (6) made of a pasty, incompressible, but deformable material placed into said channel, a rigid diving ring (7) able to sustain, directly or not, the load (1, 2) to be supported and introduced with a small play in the channel so as to rest on the cushion, and tighting means (9, 10; 11, 12) for avoiding any leak of the material forming the cushion between the channel and the ring.

2. Support according to claim 1, characterized in that the cushion (6) is made of a silicone gum.

3. Support according to any one of the preceding claims, characterized in that the half axial section of the diving ring (7) is defined by an isosceles trapezium, the great base of which is horizontal and below.

4. Support according to any one of the preceding claims, characterized in that the tighting means comprise a washer (11) made of an elastic material reinforced by two metallic collars (12) having an L profile and formed by two annular sections mutually connected, to wit a cylindrical section ($12_1$) able to vertically slide along the channel and a flat section ($12_2$) applied against the diving ring.

5. Support according to claim 4, characterized in that one at least of the opposite metal faces intended to slide against each other has been subjected before mounting to an antifriction treatment, particularly to a phosphatation-soaping treatment.

6. Support according to any one of the preceding claims, characterized in that it is associated to at least a second channel (4) – pasty cushion (6) – diving ring (7) assembly of the above mentioned kind, said assemblies being superimposed.

7. Support according to claim 6, comprising two superimposed assemblies of the mentioned kind, characterized in that said both assemblies are built in the same direction, the diving ring (7) of the lower assembly being therefor solid with the base (3) hollowed by an annular channel (4) of the upper assembly.

8. Support according to claim 6, comprising two superimposed assemblies, characterized in that said both assemblies are built head to foot, the both channels facing therefor each other and straddling a single intermediate diving ring (7), the base and the top of which are respectively introduced in said both channels.

FIG.1.

FIG.2.

FIG.3.

FIG.4.